# EUROPEAN PATENT SPECIFICATION

(11) **EP 3 031 249 B1**
(45) Date of publication and mention of the grant of the patent: **20.09.2017**
(21) Application number: 14742599.5
(22) Date of filing: 04.07.2014
(51) Int. Cl.: H04W 52/02, H04W 74/08

(54) **A NETWORK NODE AND MOBILE DEVICE FOR USE IN A COMMUNICATION NETWORK, METHODS OF OPERATING THE SAME AND COMPUTER PROGRAM PRODUCTS**
NETZWERKKNOTEN UND MOBILE VORRICHTUNG ZUR VERWENDUNG IN EINEM KOMMUNIKATIONSNETZ, VERFAHREN ZUM BETRIEB DAVON UND COMPUTERPROGRAMMPRODUKTE
NOEUD DE RÉSEAU ET DISPOSITIF MOBILE UTILISABLE DANS UN RÉSEAU DE COMMUNICATION, PROCÉDÉS D'UTILISATION DE CELUI-CI ET PROGICIELS INFORMATIQUES

(30) Priority: 09.08.2013 US 201361864055 P
(43) Date of publication of application: 15.06.2016
(73) Proprietor: Telefonaktiebolaget LM Ericsson (publ), 164 83 Stockholm (SE)
(72) Inventor: HÖGLUND, Andreas, S-170 62 Solna (SE)
(74) Representative: Ericsson
(86) International application number: PCT/SE2014/050861
(87) International publication number: WO 2015/020591

(56) References cited:
- WO-A1-2013/031133
- US-A1- 2012 300 685
- INTERDIGITAL: "Supporting Extended DRX in RRC_IDLE mode", 3GPP DRAFT; R2-131935 SUPPORTING EXTENDED DRX IN IDLE MODE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 11 May 2013 (2013-05-11), XP050700089, Retrieved from the Internet: URL:http://www.3gpp.org/ftp/tsg_ran/WG2_RL 2/TSGR2_82/Docs/ [retrieved on 2013-05-11]
- SAMSUNG: "Introduction of longer SFN length for MTC", 3GPP DRAFT; R2-131102, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 5 April 2013 (2013-04-05), XP050699256, Retrieved from the Internet: URL:http://www.3gpp.org/ftp/tsg_ran/WG2_RL 2/TSGR2_81bis/Docs/ [retrieved on 2013-04-05]

## Description

### Technical Field

The technology described relates to communication networks, and in particular to techniques for allowing mobile devices to operate with an extended system frame number (SFN) period, for example for the purpose of extending a discontinuous reception (DRX) period.

### Background

In a typical cellular radio system, radio or wireless terminals (also known as mobile stations and/or user equipment units (UEs)) communicate via a radio access network (RAN) to one or more core network. The radio access network (RAN) covers a geographical area which is divided into cell areas, with each cell area being served by a base station, e.g., a radio base station (RBS), which in some network may also be called, for example, a "NodeB" (in a Universal Mobile Telecommunications System (UMTS) network) or "eNodeB" (in a Long Term Evolution (LTE) network). A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units (UEs) within range of the base stations.

In some radio access networks, several base stations may be connected (e.g., by landlines or microwave) to a radio network controller (RNC) or a base station controller (BSC). The radio network controller supervises and coordinates various activities of the plural base stations connected thereto. The radio network controllers are typically connected to one or more core network.

The Universal Mobile Telecommunications System (UMTS) is a third generation mobile communication system, which evolved from the Global System for Mobile Communications (GSM). Universal Terrestrial Radio Access Network (UTRAN) is essentially a radio access network using wideband code division multiple access (WCDMA) for user equipment units (UEs).

In a forum known as the Third Generation Partnership Project (3GPP), telecommunications suppliers propose and agree upon standards for third generation network and UTRAN specifically, and investigate enhanced data rate and radio capacity. The Third Generation Partnership Project (3GPP) has undertaken to evolve further the UTRAN and GSM based radio access network technologies. A number of releases for the Evolved Universal Terrestrial Radio Access Network (E-UTRAN) specification have issued, and as with most specifications, the standard is likely to evolve. The Evolved Universal Terrestrial Radio Access Network (E-UTRAN) comprises the Long Term Evolution (LTE) and System Architecture Evolution (SAE).

Long Term Evolution (LTE) is a variant of a 3GPP radio access technology where the radio base station nodes are connected to a core network (via Access Gateways (AGWs)) rather than to radio network controller (RNC) nodes. In general, in LTE the functions of a radio network controller (RNC) node are distributed between the radio base stations nodes (eNodeBs in LTE) and AGWs. As such, the radio access network (RAN) of an LTE system has what is sometimes termed a "flat" architecture including radio base station nodes without reporting to radio network controller (RNC) nodes.

A currently popular vision of the future of cellular network includes machines or other autonomous devices communicating between each other (or with an application server) without human interaction. A typical scenario is to have sensors sending measurements infrequently, where each of the transmissions would consist of only small amounts of data. This type of communication is called machine-to-machine (M2M) communication in the literature, or machine-type communication (MTC), in 3GPP.

UEs in cellular systems (such as 3GPP WCDMA, LTE) are most commonly battery driven and the power consumption of these devices is therefore an important factor.

In the context of MTC, many of the devices are expected to be battery operated as well. Sensors and other devices may reside in remote locations and the number of deployed devices could be so large that it would be practically infeasible to replace or frequently recharge the batteries in these kinds of devices. Thus, it is an important goal to aim for reduction in the power consumption when considering improvements for current cellular systems.

An existing means to reduce the battery power consumption is to use discontinuous reception (DRX), a feature in which the UE's receiver is switched off except at configured intervals.

Currently the longest specified DRX cycle lengths are 2.56 seconds and 5.12 seconds for EUTRA and UTRA, respectively. However, it would be beneficial to extend the DRX cycle lengths beyond currently specified values to further reduce the battery power consumption, especially for the benefit of MTC devices where there is no possibility for interactive charging of the battery on a regular basis. Although longer DRX cycle lengths naturally cause larger delays in the downlink, this is typically not a problem for delay insensitive traffic such as that generated by MTC devices.

However, the DRX cycle length is currently limited by a System Frame Number (SFN) period. The SFN is used by UEs to keep synchronisation with the network and is used as a timing reference. In LTE the SFN period is 1024 radio frames equal to 10.24 seconds and in High-Speed Packet Access (HSPA) the SFN period is 4096 radio frames equal to 40.96 seconds.

In LTE a UE needs 10 bits to determine the SFN since it takes 1024 different values. Eight of these bits are broadcast by the network in a system frame number field in the master information block (MIB). The MIB is broadcast for 40ms during which the same information (including the value in the system frame number field) is repeated four times, i.e. every 10ms. As the MIB only carries eight of the bits for the SFN, the last two bits, which gives four values for the SFN within the 40ms period, are retrieved implicitly by the UE from the different scrambling codes used for the four copies of the MIB broadcast in each 10ms period.

Document WO2013/031133 discloses a solution according to the prior art.

### Summary

With a DRX cycle length longer than the SFN period (1024 radio frames equal to 10.24 seconds for LTE and 4096 radio frames equal to 40.96 seconds for High-Speed Packet Access (HSPA)) there would have to be a way to index the SFN periods in order to tell them apart within the extended DRX cycle length. For example, if the DRX cycle length for LTE was extended to 40.96 seconds, it would be necessary to index the four SFN periods occurring within that extended DRX cycle length in order for the UE to tell them apart. This index can correspond to using additional bits to extend the SFN range. If, for example, two index/expansion bits are used, this could either be viewed as labelling each SFN period (1024 frames) with an index from 1 to 4 or expanding the maximal SFN from 1024 radio frames to 4096 radio frames. Note however that these additional bits would only be read by UEs configured to operate with extended DRX since legacy UEs (i.e. UEs configured according to earlier versions of the standards) would not be able to interpret SFN values larger than 1024.

Thus, it is necessary to find useful ways of communicating these additional SFN bits from the network to the UE.

One possible solution is to include the additional SFN bits in the system information (SI) that is broadcast by the network to the UEs. The SI includes the MIB and other information required by the UEs to communicate reliably with the network. The other information is distributed between different system information blocks (SIBs) which are scheduled in different ways. As indicated above, the eight bits of the SFN are placed in the MIB which is scheduled with a fixed period, with the other two bits of the SFN being derived from the scrambling code used with each copy of the MIB broadcast over a 40ms period. Other SI such as Cell ID and cell barring information is placed in System Information Block type 1 (SIB1), which is also scheduled periodically but with a different fixed periodicity to the MIB. There are various other SIBs which contain other SI and are scheduled dynamically. In order to find the dynamically scheduled SIBs, the UE needs to acquire a scheduling list field which is included in SIB1 and which indicates the scheduling of the dynamically scheduled SIBs. In other words, the acquisition of other SIBs requires the acquisition of SIB type 1 first.

Thus, if the additional SFN bits are included in either an existing SIB or in a new SIB, which could be introduced for this purpose, a UE would first need to read SIB1 in order to obtain the scheduling information of the SIB containing the additional bits. That means, if a UE is waking up from a very long DRX cycle, the UE will typically need to read at least three information blocks in order to obtain the full extended SFN, which will have an adverse impact on the MTC UE's battery lifetime.

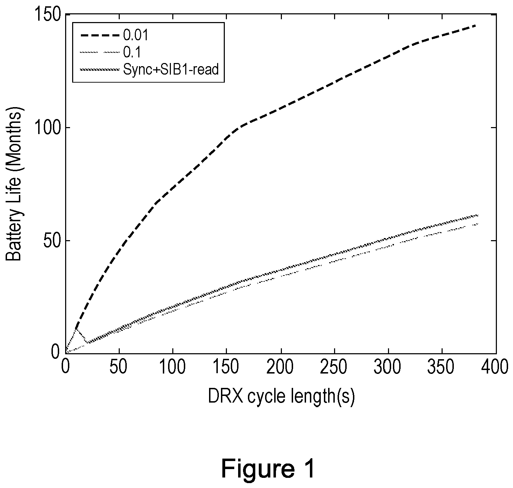

Even if the additional bits were put directly into SIB1, the requirement to read this SIB could have a bad enough impact on battery life to make it unfeasible. This negative impact is illustrated in Figure 1 (for a worst case scenario). The worst case scenario would be that SIB1 would have to be read once every DRX cycle with a reading time of 80 ms, and assuming bad radio conditions plus a 10 ms sync time. Using a simple power consumption model, the battery life is plotted against the DRX cycle length for this worst case scenario. In the model it is assumed that SIB1 only has to be read for DRX cycle lengths longer than 10.24 seconds which causes a discrete step in the curve. The other curves show the battery life for two fixed start-up times before the transmission, 10ms and 100ms. Not surprisingly, the battery life when SIB1 has to be read is equal to that of a fixed sync time of 10 ms before the discrete step and afterwards it is very close to that of a 100 ms fixed sync time.

In view of the problems with including the additional SFN bits in SIB1 or other SIBs, it would be preferable to include the additional bits in the MIB with the other SFN bits since the MIB is currently used by the UEs to obtain the SFN. However, since the MIB is broadcast very frequently, it is required to have a very small payload.

Currently, there are ten 'spare' bits in the MIB that do not have a defined function or purpose which could be used to indicate the additional SFN bits. However, the spare bits are intended to allow EUTRAN to be enhanced with new features throughout its lifetime and careful consideration must be given before allocating these bits to new purposes.

Using more than, say, two of these bits may therefore be difficult, especially since only a relatively small fraction of all new UEs may make use of (or be able to make use of) extended DRX cycles. Unfortunately, the gain in terms of battery life is rather modest if only one or a couple of bits are used. The document R2-131691 entitled "Analysis of standardization impacts of MTCe UEPCOP solutions" submitted by Ericsson and ST-Ericsson to RAN2#82 in Fukuoka, Japan on 20-24 May 2013 models power consumption with extended DRX and suggests that the DRX cycle length should be increased by at least a factor of 10, requiring at least four additional SFN bits, in order to obtain significant gains, especially for long inter-arrival-times.

Thus, in summary, it is impractical or highly unlikely that enough of the spare bits in the MIB could be dedicated to purpose of extending DRX cycles. Using only one or two bits to extend the SFN and thus the DRX cycle would not provide sufficient battery consumption gains for, for example, MTC devices.

In view of these difficulties with including additional bits to extend the SFN in the MIB, aspects provide an alternative way of signalling an extended SFN. In particular, instead of transmitting one or more additional bits for the SFN, a single bit in the MIB (from the spare bits currently available) is used as a reference bit (called a 'time reference bit' or 'time stamp' herein) to indicate the first (or another specified) SFN period in the extended SFN period. That is, where this time reference bit is set to, say, '1', this can indicate the MIB is in the first (or another specified) SFN period in the extended SFN period, and the time reference bit will be set to, say, '0' in the other SFN periods making up the extended SFN period. In this way, a UE can keep track of an extended SFN index or additional SFN bits itself once it finds this 'time reference bit' in an MIB.

Although the use of a time reference bit means that it can take the UE a number of SFN periods before there is a wrap-around to the first (or other specified) SFN period and the first (or other specified) SFN period is identified, the trade-off is that only a single additional bit is required to be used in the MIB to signal an extended SFN period that can be many times the length of a conventional SFN period.

However, since the 'time reference bit' is set to the same value in each MIB broadcast throughout each SFN period, it will be sufficient for the UE to read the MIB once per SFN period while searching for first (or specified) SFN period. This means that a UE using DRX would effectively switch to a shorter DRX cycle during this search (for example equal to the conventional SFN period), which will only have a minor impact on battery consumption (compared to the gains from using a longer DRX cycle enabled by the extended SFN period). Since the time stamp/time reference bit would be provided to the UE from the network (e.g. timing information such as the remaining time until the time reference bit is set) at radio resource control (RRC) connection setup or Hand-over reply, UEs would need to switch to this shorter DRX cycle for finding the time reference bit only rarely (for example in the case of recalibration).

Thus, according to the above, the frequently broadcasted MIB, which UEs read anyway to obtain the SFN, can be used for the expansion of the SFN range in order to have extended DRX cycles (i.e. extended beyond the SFN period), while requiring only one additional bit of information to be broadcast. Providing extended DRX cycles in this way can provide large battery consumption gains. It will be appreciated that the extended SFN range can be used for other or additional purposes to providing extended DRX cycles.

Although the techniques presented herein are described with reference to extending the SFN period to enable longer DRX cycles than the length of the conventional SFN period, it will be appreciated that an extended SFN period can be used for purposes other than DRX and is not restricted to UEs that use or that can use DRX (so for example it is not restricted to MTC UEs).

According to a specific aspect, there is provided a method of operating a network node in a communication network to provide timing information for a mobile device, the network defining an extended period that is longer than a predefined period in the network, and each predefined period in the network corresponding to the time taken to transmit a predefined plurality of frames. The method comprises broadcasting a plurality of information blocks, IBs, to the mobile device, each IB indicating a current frame number in the predefined plurality of frames and a time reference bit, the time reference bit indicating whether the current predefined period is a particular one of a number of predefined periods in the extended period.

In some embodiments, the network node is to provide timing information for a mobile device operating in a discontinuous reception (DRX) mode, with a maximum DRX cycle period for the mobile device corresponding to the length of the extended period, and the time reference bit indicates whether the current predefined period is a particular one of the number of predefined periods in the maximum DRX cycle period/extended period.

In some embodiments, the predefined periods in the network are system frame number, SFN, periods and the frame number is an SFN. In some embodiments the predefined plurality of frames comprises 1024 or 4096 frames.

In some embodiments, the time reference bit indicates whether the current predefined period is the first one of the predefined periods in the maximum DRX cycle period/extended (SFN) period.

In some embodiments, the one or more IBs are master information blocks, MIBs.

In some embodiments the step of broadcasting comprises incrementing the current frame number with each broadcast of the IB. In the event that the current frame number is equal to the number of frames in the predefined plurality, resetting the current frame number to an initial value for the next IB and determining the value for the time reference bit in the next IB according to whether the next predefined period is the particular one of the predefined periods in the extended (SFN) period.

In some embodiments, the method further comprises the step of transmitting an indication of the number of predefined periods until the time reference bit is set to a mobile device.

In some embodiments, the step of transmitting the indication of the number of predefined periods is performed during setup of a mobile device. In other or further embodiments, the step of transmitting the indication of the number of predefined periods is performed during handover of a mobile device from another network node.

According to another specific aspect, there is provided a network node for use in a communication network, the network node being configured to provide timing information for a mobile device, the network defining an extended period that is longer than a predefined period in the network, each predefined period in the network corresponding to the time taken to transmit a predefined plurality of frames. The network node comprises a transceiver module and a processing module; wherein the processing module is configured to control the transceiver module to broadcast a plurality of information blocks, IBs, to the mobile device, each IB indicating a current frame number in the predefined plurality of frames and a time reference bit, the time reference bit indicating whether the current predefined period is a particular one of a number of predefined periods in the extended period.

According to another specific aspect, there is provided a network node for use in a communication network, the network node being for providing timing information for a mobile device, the network defining an extended period that is longer than a predefined period in the network, the predefined period in the network corresponding to the time taken to transmit a predefined plurality of frames. The network node is adapted to broadcast a plurality of information blocks, IBs, to the mobile device, each IB indicating a current frame number in the predefined plurality of frames and a time reference bit, the time reference bit indicating whether the current predefined period is a particular one of a number of predefined periods in the extended period.

According to another specific aspect, there is provided a network node for use in a communication network, the network node being for providing timing information for a mobile device, the network defining an extended period that is longer than a predefined period in the network, the predefined period in the network corresponding to the time taken to transmit a predefined plurality of frames. The network node comprises a processor and a memory, said memory containing instructions executable by said processor whereby said network node is operative to broadcast a plurality of information blocks, IBs, to the mobile device, each IB indicating a current frame number in the predefined plurality of frames and a time reference bit, the time reference bit indicating whether the current predefined period is a particular one of a number of predefined periods in the extended period.

Various embodiments of the above-defined network nodes are contemplated in which the network node is adapted to or comprises instructions contained in a memory to cause the network node to perform any of the method embodiments described above.

According to another specific aspect, there is provided a method of operating a mobile device in a communication network, the network defining an extended period that is longer than a predefined period in the network, the predefined period in the network corresponding to the time taken to transmit a predefined plurality of frames. The method comprises operating a receiver in the mobile device to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period; and, after receiving an IB with a time reference bit indicating that the current predefined period is the particular one of the number of predefined periods in the extended period, processing the current frame number in said IB to determine the current frame number in the extended period.

In some embodiments, the mobile device is operating in a discontinuous reception, DRX, mode in a communication network, with a maximum DRX cycle period for the mobile device corresponding to the length of the extended period, and the step of processing uses the time reference bit to determine the current frame number in the maximum DRX cycle period/extended period.

In some embodiments, the mobile device has a selected DRX cycle length that is longer than a predefined period up to the maximum DRX cycle period, and the step of processing uses the determined current frame number in the maximum DRX cycle period to determine the current frame number in the selected DRX cycle length.

In some embodiments, the predefined periods in the network are system frame number, SFN, periods and the frame number is an SFN. In some embodiments the predefined plurality of frames comprises 1024 or 4096 frames.

In some embodiments, the time reference bit indicates whether the current SFN period is the first one of the SFN periods in the maximum DRX cycle period/extended SFN period.

In some embodiments, the one or more IBs are master information blocks, MIBs.

In some embodiments, the method further comprises the step of receiving an indication of the number of predefined periods until the time reference bit is set from the network node. In some embodiments, the step of receiving the indication of the number of predefined periods occurs during the setup of the mobile device. In some embodiments, setup of the mobile device occurs when the mobile device is powered on. In other or further embodiments, the step of receiving the indication of the number of predefined periods occurs during handover of the mobile device to the network node.

According to another specific aspect, there is provided a mobile device for use in a communication network, the network defining an extended period that is longer than a predefined period in the network, each predefined period in the network corresponding to the time taken to transmit a predefined plurality of frames. The mobile device comprises a receiver or transceiver module and a processing module; wherein the processing module is configured to operate the receiver or transceiver to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period, and to process the current frame number in a received IB to determine the current frame number in the extended period after receiving an IB with a time reference bit indicating that the current predefined period is the particular one of the predefined periods in the extended period.

According to another specific aspect, there is provided a mobile device for use in a communication network, the network defining an extended period that is longer than a predefined period in the network, the predefined period in the network corresponding to the time taken to transmit a predefined plurality of frames. The mobile device comprises a receiver, and the mobile device being adapted to operate the receiver in the mobile device to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period; and, after receiving an IB with a time reference bit indicating that the current predefined period is the particular one of the number of predefined periods in the extended period, process the current frame number in said IB to determine the current frame number in the extended period.

According to another specific aspect, there is provided a mobile device for use in a communication network, the network defining an extended period that is longer than a predefined period in the network, the predefined period in the network corresponding to the time taken to transmit a predefined plurality of frames. The mobile device comprises a receiver, a processor and a memory, said memory containing instructions executable by said processor whereby said mobile device is operative to operate the receiver in the mobile device to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period; and, after receiving an IB with a time reference bit indicating that the current predefined period is the particular one of the number of predefined periods in the extended period, process the current frame number in said IB to determine the current frame number in the extended period.

Various embodiments of the above-defined mobile devices are contemplated in which the mobile device is adapted to or comprises instructions contained in a memory to cause the mobile device to perform any of the method embodiments described above.

Yet another aspect provides a computer program product having computer readable code embodied therein, the computer readable code being configured such that, on execution by a suitable computer or processor, the computer or processor is caused to perform any of the method embodiments described above.

### Brief Description of the Drawings

Figure 1 is a graph illustrating the battery life for different DRX cycle lengths when SIB1 has to be read each time that a UE wakes up from DRX compared to fixed sync times of 10ms and 100ms;
Figure 2 is a non-limiting example block diagram of an LTE cellular communications network;
Figure 3 is a block diagram of a mobile device according to an embodiment;
Figure 4 is a block diagram of a base station according to an embodiment;
Figure 5 is a block diagram of a core network node according to an embodiment;
Figure 6 is a schematic illustration of the use of a time reference bit to extend an SFN period;
Figure 7 is a flow chart illustrating a method of operating a network node according to an embodiment;
Figure 8 is a flow chart illustrating a method of operating a mobile device according to an embodiment;
Figure 9 is a schematic illustration of the use of a time reference bit and index bit to extend an SFN period;
Figure 10 is a schematic illustration of an alternative use of a time reference bit and index bit to extend an SFN period;
Figure 11 is a schematic illustration of the use of multiple time reference bits to extend an SFN period; and
Figure 12 is a schematic illustration of an alternative use of multiple time reference bits to extend an SFN period.

### Detailed Description

The following sets forth specific details, such as particular embodiments for purposes of explanation and not limitation. But it will be appreciated by one skilled in the art that other embodiments may be employed apart from these specific details. In some instances, detailed descriptions of well known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing modules or one or more controllers, and the terms computer, processor, processing module and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Although the description is given for user equipment (UE), it should be understood by the skilled in the art that "UE" is a non-limiting term comprising any mobile or wireless device or node equipped with a radio interface allowing for at least one of: transmitting signals in UL and receiving and/or measuring signals in DL. A UE herein may comprise a UE (in its general sense) capable of operating or at least performing measurements in one or more frequencies, carrier frequencies, component carriers or frequency bands. It may be a "UE" operating in single- or multi-RAT or multi-standard mode. As well as "UE", the term "mobile device" is used interchangeably in the following description, and it will be appreciated that such a device, particularly a MTC device, does not necessarily have to be 'mobile' in the sense that it is carried by a user. Instead, the term "mobile device" encompasses any device that is capable of communicating with communication network that operate according to one or more mobile communication standards, such as GSM, UMTS, LTE, etc.

A cell is associated with a base station, where a base station comprises in a general sense any node transmitting radio signals in the downlink (DL) and/or receiving radio signals in the uplink (UL). Some example base stations, or terms used for describing base stations, are eNodeB, eNB, Node B, macro/micro/pico/femto radio base station, home eNodeB (also known as femto base station), relay, repeater, sensor, transmitting-only radio nodes or receiving-only radio nodes. A base station may operate or at least perform measurements in one or more frequencies, carrier frequencies or frequency bands and may be capable of carrier aggregation. It may also be a single-radio access technology (RAT), multi-RAT, or multi-standard node, e.g., using the same or different base band modules for different RATs.

It should be noted that use of the term "network node" as used herein can refer to a base station, such as an eNodeB, a network node in the RAN responsible for resource management, such as a radio network controller (RNC), or a core network node, such as a mobility management entity (MME).

The signalling described is either via direct links or logical links (e.g. via higher layer protocols and/or via one or more network nodes). For example, signalling from a coordinating node may pass another network node, e.g., a radio node.

It will be appreciated that although the following description of the embodiments relates to EUTRAN, the principle of using a time reference bit in an information block as described herein is equally applicable to UTRAN and similar wireless communication systems.

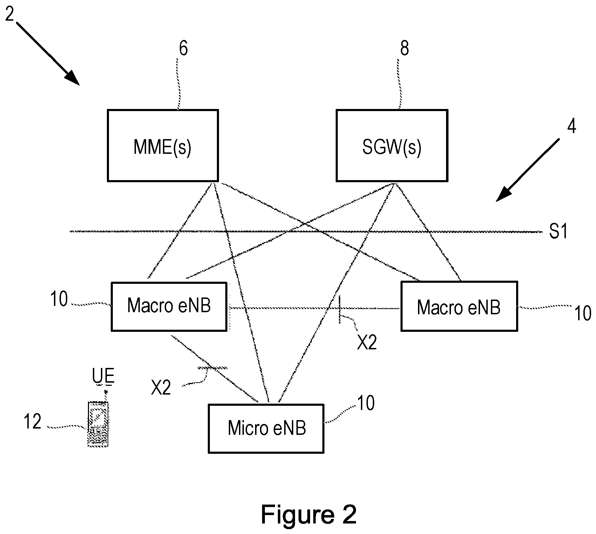

Figure 2 shows an example diagram of an EUTRAN architecture as part of an LTE-based communications system 2. Nodes in the core network 4 include one or more Mobility Management Entities (MMEs) 6, a key control node for the LTE access network, and one or more Serving Gateways (SGWs) 8 which route and forward user data packets while acting as a mobility anchor. They communicate with base stations 10 referred to in LTE as eNBs, over an interface, for example an S1 interface. The eNBs 10 can include the same or different categories of eNBs, e.g. macro eNBs, and/or micro/pico/femto eNBs. The eNBs 10 communicate with each other over an interface, for example an X2 interface. The S1 interface and X2 interface are defined in the LTE standard. A UE 12 can receive downlink data from and send uplink data to one of the base stations 10 with that base station 10 being referred to as the serving base station of the UE 12.

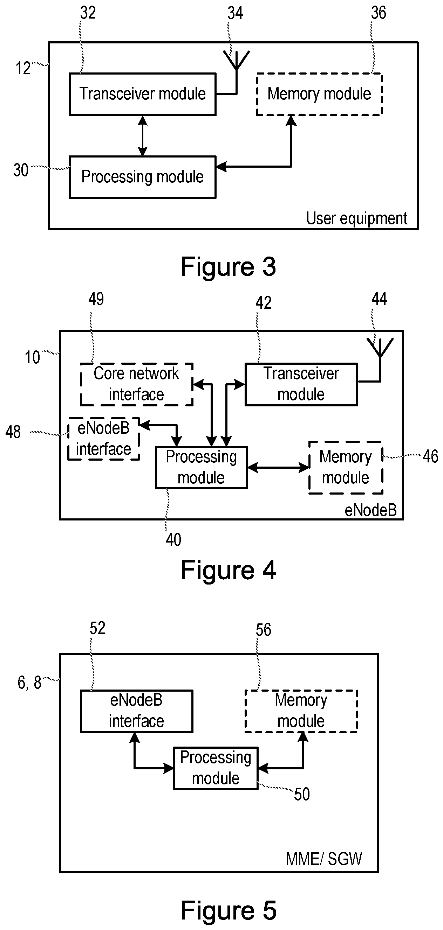

Figure 3 shows a user equipment (UE) 12 that can be used in one or more of the non-limiting example embodiments described. The UE 12 may in some embodiments be a mobile device that is configured for machine-to-machine (M2M) or machine-type communication (MTC). The UE 12 comprises a processing module 30 that controls the operation of the UE 12. The processing module 30 is connected to a receiver or a transceiver module 32 (which comprises a receiver and a transmitter) with associated antenna(s) 34 which are used to receive signals from or both transmit signals to and receive signals from a base station 10 in the network 2. To make use of discontinuous reception (DRX), the processing module 30 can be configured to deactivate the receiver or transceiver module 32 for specified lengths of time. The user equipment 12 also comprises a memory module 36 that is connected to the processing module 30 and that stores program and other information and data required for the operation of the U E 12.

Figure 4 shows a base station 10 (for example a NodeB or an eNodeB) that can be used in example embodiments described. It will be appreciated that although a macro eNB will not in practice be identical in size and structure to a micro eNB, for the purposes of illustration, the base stations 10 are assumed to include similar components. Thus, the base station 10 comprises a processing module 40 that controls the operation of the base station 10. The processing module 40 is connected to a transceiver module 42 (which comprises a receiver and a transmitter) with associated antenna(s) 44 which are used to transmit signals to, and receive signals from, user equipments 12 in the network 2. The base station 10 also comprises a memory module 46 that is connected to the processing module 40 and that stores program and other information and data required for the operation of the base station 10. The base station 10 also includes components and/or circuitry 48 for allowing the base station 10 to exchange information with other base stations 10 (for example via an X2 interface) and components and/or circuitry 49 for allowing the base station 10 to exchange information with nodes in the core network 4 (for example via the S1 interface). It will be appreciated that base stations for use in other types of network (e.g. UTRAN or WCDMA RAN) will include similar components to those shown in Figure 3 and appropriate interface circuitry 48, 49 for enabling communications with the other network nodes in those types of network (e.g. other base stations, mobility management nodes and/or nodes in the core network).

Figure 5 shows a core network node 6, 8 that can be used in the example embodiments described. The node 6, 8 comprises a processing module 50 that controls the operation of the node 6, 8. The processing module 50 is connected to components and/or circuitry 52 for allowing the node 6, 8 to exchange information with the base stations 10 with which it is associated (which is typically via the S1 interface). The node 6, 8 also comprises a memory module 56 that is connected to the processing module 50 and that stores program and other information and data required for the operation of the node 6, 8.

It will be appreciated that only the components of the UE 12, base station 10 and core network node 6, 8 required to explain the embodiments presented herein are illustrated in Figures 3, 4 and 5.

As described above, an extended SFN period is provided that is longer than a normal SFN period. The length of the extended SFN period is typically an integer multiple of the length of an SFN period. When used for DRX, the extended SFN period sets the maximum DRX cycle length for a DRX UE 12, although it will be appreciated that a particular UE 12 may use a DRX cycle length that is longer than a normal SFN period up to the extended SFN period. In order to signal the SFN within this extended SFN period to DRX UEs 12 (and non-DRX UEs 12 that are otherwise making use of the extended SFN period), a single bit is included in an information block, IB (e.g. a master information block (MIB)), along with the current SFN for a 'normal' SFN period, with the time reference bit indicating whether the current SFN period is a specified one of the SFN periods in the extended SFN period. The specified one of the SFN periods in the extended SFN period signalled by the time reference bit can be the first SFN period, the last SFN period, or an intermediate (e.g. second, third, etc.) SFN period as required according to the specific implementation. However, the time reference bit is preferably used to indicate whether the SFN period is the first SFN period in the extended SFN period.

In preferred implementations one of the spare bits defined in the MIB is used for the time reference bit.

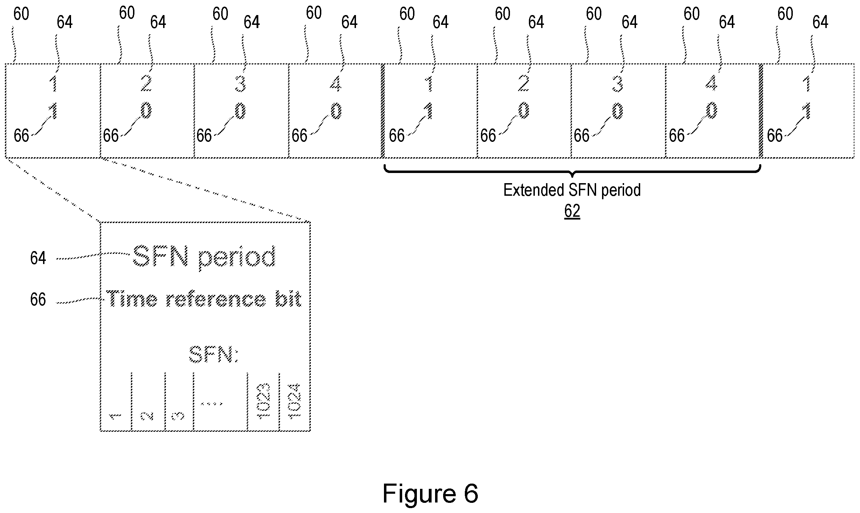

Figure 6 is a schematic illustration of the use of a time reference bit to extend an SFN period according to an embodiment. Each block 60 represents an SFN period signalled in a master information block (MIB) (or other information block (IB) that is used to signal frame numbering) with SFN ranging from 0 to 1023. The 1024 values for SFN are indicated to the UEs in the conventional manner, i.e. with an 8-bit System Frame Number field, and the remaining two bits being derived by a UE 12 from the different scrambling codes used for the four copies of the MIB broadcast in each 10ms period.

In this embodiment, the extended SFN period/maximum DRX cycle length 62 corresponds to the length of four SFN periods 60. The extended SFN period 62 in this embodiment is therefore 4096 frames. It will be appreciated that extended SFN periods 62 of alternative lengths can be formed corresponding to more or less than four SFN periods 60.

Within the extended SFN period 60 shown in Figure 6, each of the SFN periods is labeled 1-4 respectively (indicated by reference number 64). Each SFN period 60 also has an associated value for the time reference bit 66 that is included along with the current SFN (e.g. 768) in the MIB or other IB. In this embodiment, the time reference bit 66 is used to indicate the first SFN period 60 (SFN period 1) in the extended SFN period 62. Thus, the time reference bit is set to '1' for MIBs broadcast in the first SFN period 60 in each extended SFN period 62. The time reference bit is set to '0' in MIBs broadcast in the other SFN periods 60 to indicate that these are not the first SFN period 60 in the extended SFN period 62. It will be appreciated that in some implementations the significance of the '1' and '0' values for the time reference bit can be switched.

Where shorter or longer extended SFN periods 62 are desired to the embodiment shown in Figure 6, it will be appreciated that the time reference bit 66 will be set to '0' for the appropriate number of SFN periods 60.

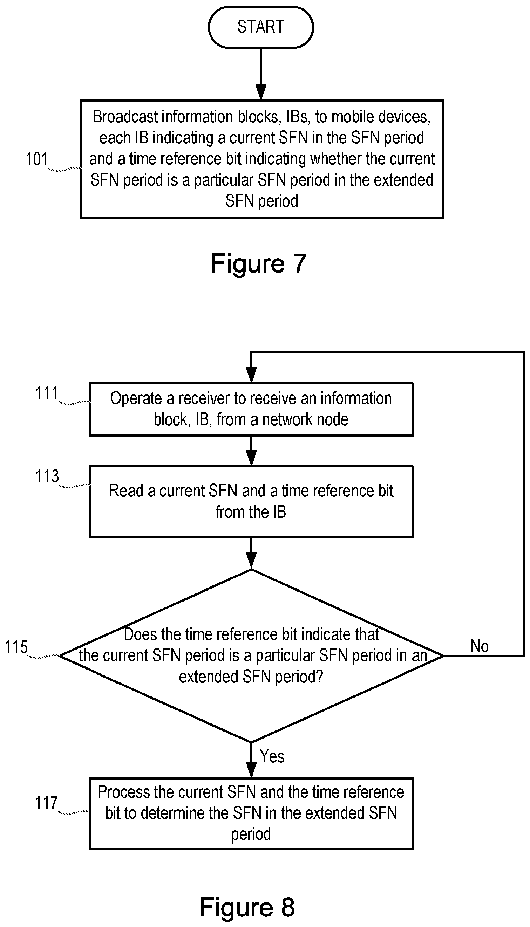

Figure 7 illustrates a method of operating a network node, such as a base station 10, according to an embodiment. In step 101, the network node 10 (and in particular the processing module 40) forms an information block (IB) that indicates a current SFN and an appropriate value for the time reference bit 66 (e.g. '1' if the SFN period is the particular SFN period in the extended SFN period 62 and '0' otherwise) and broadcasts the IB to UEs 12 in the cell of the node 10 using the transceiver module 42.

The current SFN can then be incremented for broadcast in the next IB (it being appreciated that the value provided in the system frame number field in the MIB will be incremented by one following four repeats of the current value with the different scrambling codes). When the current SFN reaches the end of the SFN period 60 (e.g. SFN=1023), the current SFN value 'wraps-around' and returns to SFN=0 for the next SFN period 60. In this case, the node 10 determines the value for the time reference bit 66 to be included in the MIB for each broadcast during the next SFN period 60.

As noted above, it will be appreciated that the base station 10/network 2 can define the extended SFN period 62 for the purpose of enabling longer DRX cycles than the current maximum of an SFN period, as well as for other purposes.

Figure 8 illustrates a method of operating a mobile device, such as a UE 12, according to an embodiment. In this illustrated embodiment the UE 12 is operating in a discontinuous reception (DRX) mode with a selected DRX cycle period that is longer than the SFN period 60 up to the length of the extended SFN period 62 defined in the network 2 (which sets the maximum DRX cycle length). The length of the DRX cycle for the UE 12 is typically selected by the network 2, but in some cases it can be selected by the UE 12 itself. Operating in the DRX mode means that the receiver or transceiver module 32 in the UE 12 is typically deactivated or powered down and is only activated at specific intervals to receive paging messages from the network 2. However, in order to ensure that the UE 12 activates the receiver or transceiver module 32 at the right time, the UE 12 needs to determine the current SFN within the extended SFN period 62 in order to synchronise with the network 2.

Thus, in step 111 the processing module 30 activates the receiver or transceiver module 32 to receive an information block, IB, broadcast by a network node 10.

In step 113, the processing module 30 reads the IB to determine a current SFN (which as noted above can be determined by reading an 8-bit value in an SFN field in the IB and determining a further two-bit value from the repetition of the MIB that the UE 12 is reading) and also a time reference bit 66. As noted above, the time reference bit 66 indicates whether the current SFN period is the particular (e.g. first) SFN period in the extended SFN period 62.

In step 115, the processing module 30 determines whether the time reference bit 66 indicates that the current SFN period 60 is the particular one of the plurality of SFN periods 60 in the extended SFN period 62. If not, the method returns to step 111 and the processing module 30 operates the receiver or transceiver module 32 at an appropriate time to receive another IB.

If the time reference bit 66 indicates that the current SFN period 60 is the particular one of the plurality of SFN periods 60 in the extended SFN period 62, the processing module 30 uses the fact that the current SFN period 60 is the particular (e.g. first) SFN period 60 and the SFN indicated in the IB to determine the current SFN in the extended SFN period 62 (step 117). Once the current SFN in the extended SFN period 62 is determined, the processing module 30 can determine the current frame number in the selected DRX cycle length. The mobile device 12 is now synchronised with the extended SFN period and can now wake-up at the appropriate times to be paged by the network. Hence, when the mobile device 12 receives a subsequent MIB, the processing module 30 knows where in the extended SFN period 62 the current SFN period 60 lies, and can determine the current SFN in the extended SFN period 62 from the SFN indicated in the MIB.

Although the method illustrated in Figure 8 applies to a UE 12 operating with DRX, it will be appreciated that a similar method to that shown in Figure 8 can be used by a non-DRX UE 12 to obtain synchronisation with the extended SFN defined in the network 2 for other purposes.

As indicated above, the use of the time reference bit 66 is an alternative to having indexes for the SFN periods; with a reduction in the number of broadcasted index bits required traded off against a longer time required for the UE 12 to get in sync with the network and determine the SFN in the extended SFN period 62 (since the UE 12 needs to receive an SFN in the particular SFN period 60 before synchronisation can occur).

In some embodiments, a UE 12 entering a cell may have to stay in an active receiving mode reading the MIB until the 'time reference bit' (e.g. value '1') is found in order to determine the full extended SFN in the extended SFN period 62. This could potentially cause a reduction in battery life.

In some embodiments, when a UE 12 is powered-on (or on occurrence of another event, such as when the UE 12 wishes to establish a connection, the network node 10 can signal the number of SFN periods 60 left until the next time the time reference bit 66 is set (i.e. to '1') along with other information typically communicated to the UE 12 from the network 2 at setup. Likewise, during hand-over to a new network node 10, the information on the number of SFN periods 60 left until the next time the time reference bit 66 is set (in the target cell) could in the same way be included the reply from the target cell (network node 10). In either case, as an alternative, if the extended SFN period is predetermined, the network node 10 can signal the number of SFN periods elapsed since the previous time the time reference bit 66 was set. In the embodiments described below where multiple time reference bits are used, the network node 10 can signal the number of SFN periods 60 left until the next time any of the time reference bits is set (and in some cases also indicate which of the time reference bits is set.

At cell-reselection, however, the UE 12 will need to wait for the time reference bit 66. However, since the time reference bit 66 is the same for an entire SFN period 60, it would however be sufficient for the UE 12 to only read the MIB once per SFN period 60, effectively meaning that the UE 12 switches to a shorter DRX cycle (i.e. a cycle that is equal to or less than an SFN period 60) until the time stamp (time reference bit) is found, which means that there would only be a minor impact on battery consumption in rare cases.

There is another reason (other than a slight increase in battery consumption in rare cases) not to have the time stamp bit set too infrequently; up until the point the UE 12 reads an IB with the time reference bit set it is not reachable by paging and considered out-of-coverage by the network 2. The quality of service (QoS) requirement on the MTC UE 12 would then dictate the maximal DRX cycle length that could be used. If all ten spare bits in the MIB were used as additional bits for extending the SFN, for example, the maximal DRX cycle length would be 2.9 hours. Exactly the same DRX cycle length could be achieved with the time reference bit using only one bit. The downside would be that a UE 12 could in the worst case not be reachable by paging for almost 3 hours at cell reselection. To remedy or at least partially mitigate this problem, a hybrid solution could be used in which an additional one or more of the spare bits in the MIB could be used to get a finer granularity and/or different 'time reference bits'. For example, with two bits instead of one a UE 12 would obtain synchronisation in a third of the time.

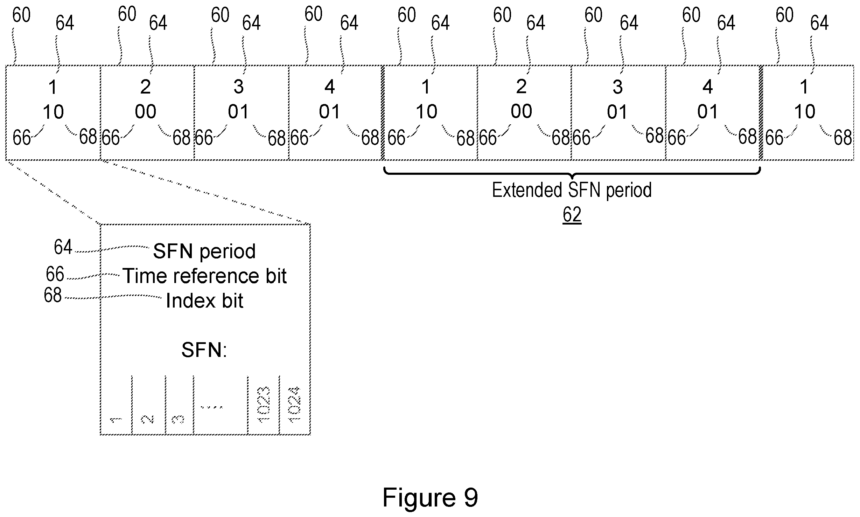

Figure 9 illustrates a further embodiment in which an 'index bit' is provided in addition to the time reference bit that can be used to indicate to a UE 12 which of two portions of the extended SFN period 62 the current SFN period 60 is in. For example, the index bit can be used to indicate whether the current SFN period 60 is in the first half or the second half of the extended SFN period 62. This provides a UE 12 that is not already synchronised with the network with an indication of where it is in the extended SFN period 62, and enables the UE 12 to estimate the time that it may need to wake-up in order to receive a MIB in the SFN period 60 where the time reference bit 66 is set and thus obtain synchronisation.

The embodiment shown in Figure 9 corresponds to the embodiment shown in Figure 6, with the addition of an index bit 68 that is broadcast each system frame. The index bit 68 can be broadcast in the MIB along with the time reference bit 64, or it can be broadcast in a separate information block, such as a system information block, SIB.

In the embodiment of Figure 9, the index bit 68 is used to distinguish between the first and second halves of the extended SFN period 62. That is, as the length of the extended SFN period 62 is equal to four SFN periods 62, the index bit 68 can be set to '0' in the first two SFN periods 60 in the extended SFN period 62 and set to '1' in the third and fourth SFN periods 60 in the extended SFN period 62 in order to indicate to the UE 12 which half of the extended SFN period 62 the current (i.e. received) SFN period 60 is in.

More generally, the extended SFN period 62 can be divided into two portions through the use of an index bit 68, with the value of the index bit 68 indicating to a UE 12 which portion of the extended SFN period the UE 12 is in. Therefore, in the example of Figure 9, if the UE 12 receives an MIB and the time reference bit 66 is set to '1', it will know that the current SFN period 60 is the first SFN period 60 in the extended SFN period 62 and it can determine the current SFN in the extended SFN period 62. Otherwise, if the time reference bit 66 is set to '0', the UE 12 can examine the index bit 68 to determine which half of the extended SFN period 62 the current SFN period 60 is in, and determine another time to wake-up and potentially receive a MIB that has the time reference bit 66 set.

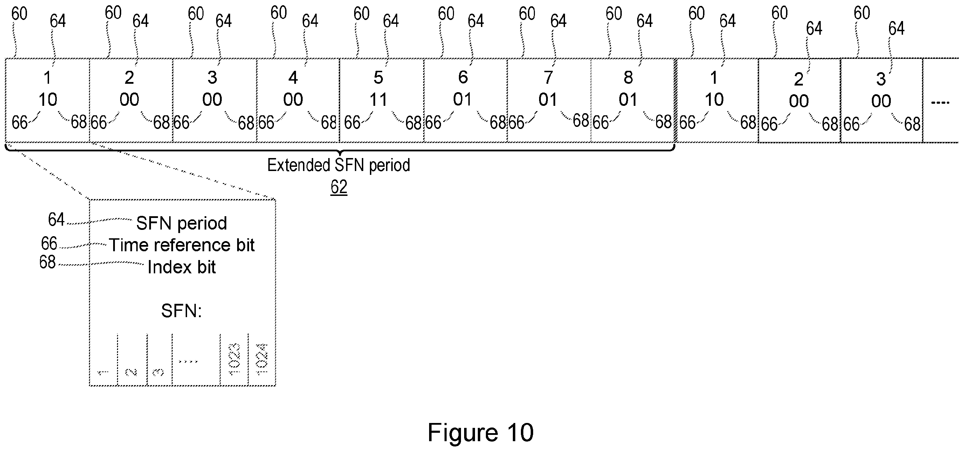

In a further embodiment, the UE 12 can be configured to interpret the time reference bit 66 and the index bit 68 together to further reduce the time required to obtain synchronisation. This embodiment is illustrated in Figure 10. In this embodiment, the extended SFN period 62 is the length of eight standard SFN periods 60. As described above, the index bit 68 is used to indicate whether the current SFN 60 is in the first half or the second half of the extended SFN period 62. However, in this embodiment, the time reference bit 66 is set to '1' in one of the SFN periods 60 in the first portion (e.g. the first SFN period 60 of the extended SFN period 62) and also in an SFN period 60 in the second portion of the extended SFN period 62 (e.g. the fifth SFN period 62 in the extended SFN period 62).

In this embodiment, a UE 12 will be configured to read the time reference bit 66 and index bit 68 together to try and identify the current SFN period 60 in the extended SFN period 62. In particular, in this example, when the time reference bit 66 is '1' and the index bit is '0' the UE 12 will know that the current SFN period 60 is the first SFN period in the extended SFN period 62, when both the time reference bit and the index bit are '1' the UE 12 will know that the current SFN period 60 is the fifth SFN period in the extended SFN period 62. Otherwise, when the time reference bit 66 is set to '0' the UE 12 will use the index bit 68 to determine which portion of the extended SFN period 62 the current SFN period is in.

As indicated above, another way to achieve finer granularity and reduce the time required to achieve synchronisation is to use different time reference bits. In particular, two or more time reference bits can be provided in the MIB or other information block, and the value of these bits can code for different SFN periods 60 in the extended SFN period 62. In some embodiments the first and second time reference bits can be interpreted separately by a UE (i.e. each bit signals whether the current SFN period is a specific respective SFN period).

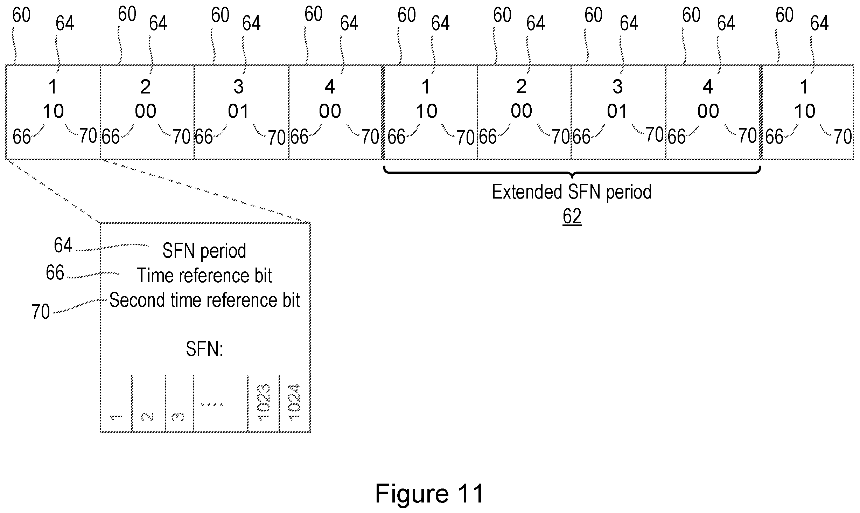

Figure 11 illustrates an embodiment in which two time reference bits are included in an MIB, and the time reference bits are read independently by the UE 12. In this embodiment, the first time reference bit 66 corresponds to the time reference bit shown in Figure 6 and thus indicates whether the current SFN period 60 is the first SFN period 60 in the extended SFN period 62. A second time reference bit 70 is provided that is used to indicate whether the current SFN period 60 is the third SFN period in the extended SFN period 62.

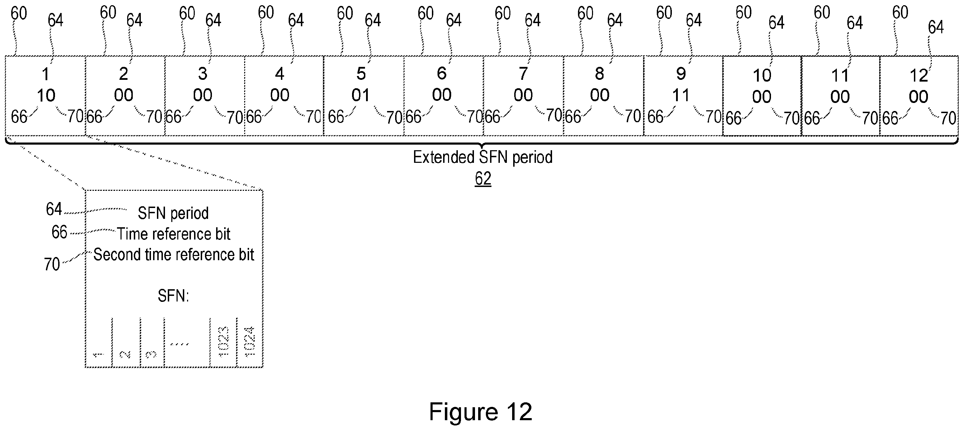

In other embodiments where multiple time reference bits are provided, the time reference bits can be interpreted together to represent one of a number of different SFN periods. For example, with two time reference bits, the values '01', '10' and '11' can represent three specific SFN periods 60 in the extended SFN period 62. This reduces the time taken for a UE to obtain synchronisation by a third compared to the use of a single time reference bit. This embodiment is illustrated in Figure 12. In this Figure, the extended SFN period 62 is the length of twelve SFN periods 60 and the time reference bits 66, 70 together identify three specific SFN periods 60. In particular, the values '01', '10' and '11' represent the first, fifth and ninth SFN periods 60 in the extended SFN period 62 respectively.

Modifications and other variants of the described embodiment(s) will come to mind to one skilled in the art having the benefit of the teachings presented in the foregoing descriptions and the associated drawings. Therefore, it is to be understood that the embodiment(s) is/are not to be limited to the specific examples disclosed and that modifications and other variants are intended to be included within the scope of this disclosure. Although specific terms may be employed herein, they are used in a generic and descriptive sense only and not for purposes of limitation.

Various non-limiting examples are set out in the following statements:
1. A method of operating a network node in a communication network to provide timing information for a mobile device, the network defining an extended period that is longer than a predefined period in the network, the predefined period in the network corresponding to the time taken to transmit a predefined plurality of frames, the method comprising broadcasting a plurality of information blocks, IBs, to the mobile device, each IB indicating a current frame number in the predefined plurality of frames and a time reference bit, the time reference bit indicating whether the current predefined period is a particular one of a number of predefined periods in the extended period.
2. A method as in statement 1, wherein the predefined periods in the network are system frame number, SFN, periods and the frame number is an SFN.
3. A method as in statement 1 or 2, wherein the one or more IBs are master information blocks, MIBs.
4. A method as in any of statements 1-3, wherein the method further comprises in the event that the current frame number is equal to the number of frames in the predefined plurality, setting the current frame number for the next IB to an initial value and determining the value for the time reference bit in the next IB according to whether the next predefined period is the particular one of the predefined periods in the extended period.
5. A method as in any of statements 1-4, wherein the method further comprises transmitting an indication of the number of predefined periods until the time reference bit is set to a mobile device.
6. A method as in statement 5, wherein the step of transmitting the indication of the number of predefined periods is performed during setup of a mobile device or during handover of a mobile device from another network node.
7. A method as in any of statements 1-6, the method further comprising the step of broadcasting an index bit for each IB that indicates whether the current predefined period is in a first portion or a second portion of the extended period.
8. A method as in statement 7, wherein the step of broadcasting comprises broadcasting the plurality of IBs with the time reference bit set in a particular one of the predefined periods in the first portion and a particular one of the predefined periods in the second portion.
9. A method as in any of statements 1-6, wherein the step of broadcasting further comprises broadcasting each IB with a second time reference bit, the second time reference bit indicating whether the current predefined period is another particular one of the number of predefined periods in the extended period.
10. A computer program product having computer readable code embodied therein, the computer readable code being configured such that, on execution by a suitable computer or processor, the computer or processor is caused to perform any of the methods in statements 1-9.
11. A network node for use in a communication network to provide timing information for a mobile device, the network defining an extended period that is longer than a predefined period in the network, the predefined period in the network corresponding to the time taken to transmit a predefined plurality of frames, the network node being adapted to broadcast a plurality of information blocks, IBs, to the mobile device, each IB indicating a current frame number in the predefined plurality of frames and a time reference bit, the time reference bit indicating whether the current predefined period is a particular one of a number of predefined periods in the extended period.
12. A network node as in statement 11, wherein the predefined periods in the network are system frame number, SFN, periods and the frame number is an SFN.
13. A network node as in statement 11 or 12, wherein the one or more IBs are master information blocks, MIBs.
14. A network node as in any of statements 11-13, wherein the network node is adapted to set the current frame number for the next IB to an initial value in the event that the current frame number is equal to the number of frames in the predefined plurality, and determine the value for the time reference bit in the next IB according to whether the next predefined period is the particular one of the predefined periods in the extended period.
15. A network node as in any of statements 11-14, wherein the network node is further adapted to transmit an indication of the number of predefined periods until the time reference bit is set to a mobile device.
16. A network node as in statement 15, wherein the network node is adapted to transmit the indication of the number of predefined periods during setup of a mobile device or during handover of a mobile device from another network node.
17. A network node as in any of statements 11-16, wherein the network node is further adapted to broadcast an index bit for each IB that indicates whether the current predefined period is in a first portion or a second portion of the extended period.
18. A network node as in statement 17, wherein the network node is adapted to broadcast the plurality of IBs with the time reference bit set in a particular one of the predefined periods in the first portion and a particular one of the predefined periods in the second portion.
19. A network node as in any of statements 11-16, wherein the network node is adapted to broadcast each IB with a second time reference bit, the second time reference bit indicating whether the current predefined period is another particular one of the number of predefined periods in the extended period.
20. A method of operating a mobile device in a communication network, the network defining an extended period that is longer than a predefined period in the network, the predefined period in the network corresponding to the time taken to transmit a predefined plurality of frames, the method comprising operating a receiver in the mobile device to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period; and after receiving an IB with a time reference bit indicating that the current predefined period is the particular one of the number of predefined periods in the extended period, processing the current frame number in said IB to determine the current frame number in the extended period.
21. A method as in statement 20, the method further comprising the step of operating the mobile device in a discontinuous reception, DRX, mode, with a maximum DRX cycle period for the mobile device corresponding to the length of the extended period.
22. A method as in statement 21, wherein the step of operating the mobile device in a DRX mode comprises operating the mobile device with a selected DRX cycle length that is longer than a predefined period up to the maximum DRX cycle period, and the method further comprises the step of using the determined current frame number in the extended period to determine the current frame number in the selected DRX cycle length.
23. A method as in any of statements 20-22, wherein the predefined periods in the network are system frame number, SFN, periods and the frame number is an SFN.
24. A method as in any of statements 20-23, wherein the one or more IBs are master information blocks, MIBs.
25. A method as in any of statements 20-24, wherein the method further comprises the step of receiving an indication of the number of predefined periods until the time reference bit is set from the network node.
26. A method as in statement 25, wherein the step of receiving the indication of the number of predefined periods occurs during the setup of the mobile device or during handover of the mobile device to the network node.
27. A method as in any of statements 20-26, the method further comprising the step of receiving an index bit for each IB that indicates whether the current predefined period is in a first portion or a second portion of the extended period.
28. A method as in statement 27, wherein, after receiving an IB that has a time reference bit indicating that the current predefined period is not the particular one of the number of predefined periods in the extended period, the method further comprises determining whether the current predefined period is in the first portion or the second portion from the received index bit.
29. A method as in statement 27, wherein the time reference bit indicates whether the current predefined period is a particular one of the predefined periods in the first portion and a particular one of the predefined periods in the second portion, and wherein the step of processing comprises processing the current frame number and the index bit in said IB to determine the current frame number in the extended period.
30. A method as in any of statements 20-26, wherein the step of receiving further comprises receiving a second time reference bit in each IB, the second time reference bit indicating whether the current predefined period is another particular one of the number of predefined periods in the extended period, and, after receiving an IB with the second time reference bit indicating that the current predefined period is the another particular one of the number of predefined periods in the extended period, the method further comprises processing the current frame number in said IB to determine the current frame number in the extended period.
31. A computer program product having computer readable code embodied therein, the computer readable code being configured such that, on execution by a suitable computer or processor, the computer or processor is caused to perform any of the methods as in any of statements 20-30.
32. A mobile device for use in a communication network, the network defining an extended period that is longer than a predefined period in the network, the predefined period in the network corresponding to the time taken to transmit a predefined plurality of frames, the mobile device comprising a receiver and the mobile device being adapted to operate the receiver to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period, and to process the current frame number in a received IB to determine the current frame number in the extended period after receiving an IB with a time reference bit indicating that the current predefined period is the particular one of the predefined periods in the extended period.
33. A mobile device as in statement 32, wherein the mobile device is adapted to operate in a discontinuous reception, DRX, mode, with a maximum DRX cycle period for the mobile device corresponding to the length of the extended period.
34. A mobile device as in statement 33, wherein the mobile device is adapted to operate in a DRX mode with a selected DRX cycle length that is longer than a predefined period up to the maximum DRX cycle period, and the mobile device is further adapted to use the determined current frame number in the extended period to determine the current frame number in the selected DRX cycle length.
35. A mobile device as in any of statements 32-34, wherein the predefined periods in the network are system frame number, SFN, periods and the frame number is an SFN.
36. A mobile device as in any of statements 32-35, wherein the one or more IBs are master information blocks, MIBs.
37. A mobile device as in any of statements 32-36, wherein the mobile device is further adapted to receive an indication of the number of predefined periods until the time reference bit is set from the network node .
38. A mobile device as in statement 37, wherein the mobile device is further adapted to receive the indication of the number of predefined periods during the setup of the mobile device or during handover of the mobile device to the network node.
39. A mobile device as in any of statements 32-38, wherein the mobile device is further adapted to receive an index bit for each IB that indicates whether the current predefined period is in a first portion or a second portion of the extended period.
40. A mobile device as in statement 39, wherein the mobile device is further adapted to determine whether the current predefined period is in the first portion or the second portion from the received index bit after receiving an IB that has a time reference bit indicating that the current predefined period is not the particular one of the number of predefined periods in the extended period.
41. A mobile device as in statement 39, wherein the time reference bit indicates whether the current predefined period is a particular one of the predefined periods in the first portion and a particular one of the predefined periods in the second portion, and wherein the mobile device is further adapted to process the current frame number and the index bit in said IB to determine the current frame number in the extended period.
42. A mobile device as in any of statements 32-38, wherein the mobile device is further adapted to receive a second time reference bit in each IB, the second time reference bit indicating whether the current predefined period is another particular one of the number of predefined periods in the extended period, and to process the current frame number in said IB to determine the current frame number in the extended period after receiving an IB with the second time reference bit indicating that the current predefined period is the another particular one of the number of predefined periods in the extended period.
43. A network node for use in a communication network, the network node being for providing timing information for a mobile device, the network defining an extended period that is longer than a predefined period in the network, the predefined period in the network corresponding to the time taken to transmit a predefined plurality of frames, the network node comprising a processor and a memory, said memory containing instructions executable by said processor whereby said network node is operative to broadcast a plurality of information blocks, IBs, to the mobile device (12), each IB indicating a current frame number in the predefined plurality of frames and a time reference bit, the time reference bit indicating whether the current predefined period is a particular one of a number of predefined periods in the extended period.
44. A network node as in statement 43, wherein the predefined periods in the network are system frame number, SFN, periods and the frame number is an SFN.
45. A network node as in statement 43 or 44, wherein the one or more IBs are master information blocks, MIBs.
46. A network node as in any of statements 43-45, wherein the network node is further operative to set the current frame number for the next IB to an initial value in the event that the current frame number is equal to the number of frames in the predefined plurality, and determine the value for the time reference bit in the next IB according to whether the next predefined period is the particular one of the predefined periods in the extended period.
47. A network node as in any of statements 43-46, wherein the network node is further operative to transmit an indication of the number of predefined periods until the time reference bit is set to a mobile device.
48. A network node as in statement 47, wherein the network node is further operative to transmit the indication of the number of predefined periods during setup of a mobile device or during handover of a mobile device from another network node.
49. A network node as in any of statements 43-48, wherein the network node is further operative to broadcast an index bit for each IB that indicates whether the current predefined period is in a first portion or a second portion of the extended period.
50. A network node as in statement 49, wherein the network node is further operative to broadcast the plurality of IBs with the time reference bit set in a particular one of the predefined periods in the first portion and a particular one of the predefined periods in the second portion.
51. A network node as in any of statements 43-48, wherein the network node is further operative to broadcast each IB with a second time reference bit, the second time reference bit indicating whether the current predefined period is another particular one of the number of predefined periods in the extended period.
52. A mobile device for use in a communication network, the network defining an extended period that is longer than a predefined period in the network, the predefined period in the network corresponding to the time taken to transmit a predefined plurality of frames, the mobile device comprising a receiver, a processor and a memory, said memory containing instructions executable by said processor whereby said mobile device is operative to operate the receiver to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period, and to process the current frame number in a received IB to determine the current frame number in the extended period after receiving an IB with a time reference bit indicating that the current predefined period is the particular one of the predefined periods in the extended period.
53. A mobile device as in statement 52, wherein the mobile device is further operative to operate in a discontinuous reception, DRX, mode, with a maximum DRX cycle period for the mobile device corresponding to the length of the extended period.
54. A mobile device as in statement 53, wherein the mobile device is further operative to operate in a DRX mode with a selected DRX cycle length that is longer than a predefined period up to the maximum DRX cycle period, and the mobile device is further adapted to use the determined current frame number in the extended period to determine the current frame number in the selected DRX cycle length.
55. A mobile device as in any of statements 52-54, wherein the predefined periods in the network are system frame number, SFN, periods and the frame number is an SFN.
56. A mobile device as in any of statements 52-55, wherein the one or more IBs are master information blocks, MIBs.
57. A mobile device as in any of statements 52-56, wherein the mobile device is further operative to receive an indication of the number of predefined periods until the time reference bit is set from the network node.
58. A mobile device as in statement 57, wherein the mobile device is further operative to receive the indication of the number of predefined periods during the setup of the mobile device or during handover of the mobile device to the network node.
59. A mobile device as in any of statements 52-58, wherein the mobile device is further operative to receive an index bit for each IB that indicates whether the current predefined period is in a first portion or a second portion of the extended period.
60. A mobile device as in statement 59, wherein the mobile device is further operative to determine whether the current predefined period is in the first portion or the second portion from the received index bit after receiving an IB that has a time reference bit indicating that the current predefined period is not the particular one of the number of predefined periods in the extended period.
61. A mobile device as in statement 59, wherein the time reference bit indicates whether the current predefined period is a particular one of the predefined periods in the first portion and a particular one of the predefined periods in the second portion, and wherein the mobile device is further operative to process the current frame number and the index bit in said IB to determine the current frame number in the extended period.
62. A mobile device as in any of statements 52-58, wherein the mobile device is further operative to receive a second time reference bit in each IB, the second time reference bit indicating whether the current predefined period is another particular one of the number of predefined periods in the extended period, and to process the current frame number in said IB to determine the current frame number in the extended period after receiving an IB with the second time reference bit indicating that the current predefined period is the another particular one of the number of predefined periods in the extended period.
63. A network node for use in a communication network to provide timing information for a mobile device, the network defining an extended period that is longer than a predefined period in the network, the predefined period in the network corresponding to the time taken to transmit a predefined plurality of frames, the network node comprising broadcasting means for broadcasting of a plurality of information blocks, IBs, to the mobile device, each IB indicating a current frame number in the predefined plurality of frames and a time reference bit, the time reference bit indicating whether the current predefined period is a particular one of a number of predefined periods in the extended period.
64. A mobile device for use in a communication network, the network defining an extended period that is longer than a predefined period in the network, the predefined period in the network corresponding to the time taken to transmit a predefined plurality of frames, the mobile device comprising receiver control means for operating a receiver in the mobile device to receive one or more information blocks, IBs, broadcast by a network node in the communication network, each IB indicating a respective current frame number in the predefined plurality of frames and a time reference bit, the time reference bit indicating whether the current predefined period is a particular one of a number of predefined periods in the extended period; and processing means for, after receiving an IB with a time reference bit indicating that the current predefined period is the particular one of the number of predefined periods in the extended period, processing the current frame number in said IB to determine the current frame number in the extended period.
   The "broadcasting means" of the network node, as well as the "receiver control means" and "processing means" of the mobile device may in some embodiments be implemented as computer programs stored in memory (e.g. in the memory modules of Figure 3 and Figure 4 respectively) for execution by processors (e.g. the processing modules of Figures 3 and Figures 4 respectively).
   Further embodiments of the above-defined network node and mobile device are contemplated in line with the various method and apparatus embodiments described above.
65. A method of operating a network node in a communication network to provide timing information for a mobile device, the network defining an extended period that is longer than a predefined period in the network, the predefined period in the network corresponding to the time taken to transmit a predefined plurality of frames, the method comprising broadcasting a plurality of information blocks, IBs, to the mobile device, each IB indicating a current frame number in the predefined plurality of frames and one or more time reference bits, the one or more time reference bits indicating whether the current predefined period is a particular one of a specified subset of predefined periods in a number of predefined periods in the extended period.
66. A method as in statement 65, wherein each IB comprises one time reference bit and the specified subset of predefined periods comprises a single predefined period.
67. A method as in statement 65, wherein each IB comprises two or more time reference bits.
   Further embodiments of the method of operating a network node as described in statements 2-7 are also contemplated.
68. A network node for use in a communication network to provide timing information for a mobile device, the network defining an extended period that is longer than a predefined period in the network, the predefined period in the network corresponding to the time taken to transmit a predefined plurality of frames, the network node being adapted to broadcast a plurality of information blocks, IBs, to the mobile device, each IB indicating a current frame number in the predefined plurality of frames and one or more time reference bits, the one or more time reference bits indicating whether the current predefined period is a particular one of a specified subset of predefined periods in a number of predefined periods in the extended period.
69. A network node as in statement 68, wherein each IB comprises one time reference bit and the specified subset of predefined periods comprises a single predefined period.
70. A network node as in statement 68, wherein each IB comprises two or more time reference bits.
   Further embodiments of the network node as described in statements 12-17 are also contemplated.
71. A method of operating a mobile device in a communication network, the network defining an extended period that is longer than a predefined period in the network, the predefined period in the network corresponding to the time taken to transmit a predefined plurality of frames, the method comprising operating a receiver in the mobile device to receive one or more information blocks, IBs, broadcast by a network node in the communication network, each IB indicating a respective current frame number in the predefined plurality of frames and one or more time reference bits, the one or more time reference bits indicating whether the current predefined period is a particular one of a specified subset of predefined periods in a number of predefined periods in the extended period; and after receiving an IB with the one or more time reference bits indicating that the current predefined period is a particular one of the specified subset of predefined periods in the extended period, processing the current frame number in said IB to determine the current frame number in the extended period.
72. A method as in statement 71, wherein each IB comprises one time reference bit and the specified subset of predefined periods comprises a single predefined period.
73. A method as in statement 71, wherein each IB comprises two or more time reference bits.
   Further embodiments of the method of operating the mobile device as described in statements 21-27 are also contemplated.
74. A mobile device for use in a communication network, the network defining an extended period that is longer than a predefined period in the network, the predefined period in the network corresponding to the time taken to transmit a predefined plurality of frames, the mobile device comprises a receiver, and the mobile device is adapted to operate the receiver in the mobile device to receive one or more information blocks, IBs, broadcast by a network node in the communication network, each IB indicating a respective current frame number in the predefined plurality of frames and one or more time reference bits, the one or more time reference bits indicating whether the current predefined period is a particular one of a specified subset of predefined periods in a number of predefined periods in the extended period; and to process the current frame number in said IB to determine the current frame number in the extended period after receiving an IB with the one or more time reference bits indicating that the current predefined period is a particular one of the specified subset of predefined periods in the extended period.
75. A mobile device as in statement 74, wherein each IB comprises one time reference bit and the specified subset of predefined periods comprises a single predefined period.
76. A mobile device as in statement 74, wherein each IB comprises two or more time reference bits.
   Further embodiments of the mobile device as described in statements 33-39 are also contemplated.

## Claims

1. A method of operating a network node (10) in a communication network (2) to provide timing information for a mobile device (12), the network (2) defining an extended period that is longer than a predefined period in the network (2), the predefined period in the network (2) corresponding to the time taken to transmit a predefined plurality of frames, the method comprising:
broadcasting (101) a plurality of information blocks, IBs, to the mobile device (12), each IB indicating a current frame number in the predefined plurality of frames and a time reference bit, the time reference bit indicating whether the current predefined period is a particular one of a number of predefined periods in the extended period, wherein the predefined periods in the network (2) are system frame number, SFN, periods and the frame number is an SFN, and **characterized in that** the extended period comprises four or more SFN periods.

2. A computer program product having computer readable code embodied therein, the computer readable code being configured such that, on execution by a suitable computer or processor, the computer or processor is caused to perform the method in claim 1.

3. A network node (10) for use in a communication network (2) to provide timing information for a mobile device (12), the network (2) defining an extended period that is longer than a predefined period in the network (2), the predefined period in the network (2) corresponding to the time taken to transmit a predefined plurality of frames, the network node (10) being adapted to:
broadcast a plurality of information blocks, IBs, to the mobile device (12), each IB indicating a current frame number in the predefined plurality of frames and a time reference bit, the time reference bit indicating whether the current predefined period is a particular one of a number of predefined periods in the extended period, wherein the predefined periods in the network (2) are system frame number, SFN, periods and the frame number is an SFN, and **characterized in that** the extended period comprises four or more SFN periods.

4. A method of operating a mobile device (12) in a communication network (2), the network (2) defining an extended period that is longer than a predefined period in the network (2), the predefined period in the network (2) corresponding to the time taken to transmit a predefined plurality of frames, the method comprising:
operating (111) a receiver (32) in the mobile device (12) to receive one or more information blocks, IBs, broadcast by a network node (10) in the communication network (2), each IB indicating a respective current frame number in the predefined plurality of frames and a time reference bit, the time reference bit indicating whether the current predefined period is a particular one of a number of predefined periods in the extended period; and
after receiving an IB with a time reference bit indicating that the current predefined period is the particular one of the number of predefined periods in the extended period, processing (117) the current frame number in said IB to determine the current frame number in the extended period, wherein the predefined periods in the network (2) are system frame number, SFN, periods and the frame number is an SFN and **characterized in that** the extended period comprises four or more SFN periods.

5. A method as in claim 4, the method further comprising the step of operating the mobile device (12) in a discontinuous reception, DRX, mode, with a maximum DRX cycle period for the mobile device (12) corresponding to the length of the extended period.

6. A method as in claim 5, wherein the step of operating the mobile device (12) in a DRX mode comprises operating the mobile device (12) with a selected DRX cycle length that is longer than a predefined period up to the maximum DRX cycle period, and the method further comprises the step of:
using the determined current frame number in the extended period to determine the current frame number in the selected DRX cycle length.

7. A method as in any of claims 4-6, wherein the one or more IBs are master information blocks, MIBs.

8. A method as in any of claims 4-7, wherein the method further comprises the step of:
receiving an indication of the number of predefined periods until the time reference bit is set from the network node (10).

9. A computer program product having computer readable code embodied therein, the computer readable code being configured such that, on execution by a suitable computer or processor, the computer or processor is caused to perform any of the methods as in any of claims 4-8.

10. A mobile device (12) for use in a communication network (2), the network (10) defining an extended period that is longer than a predefined period in the network (10), the predefined period in the network (10) corresponding to the time taken to transmit a predefined plurality of frames, the mobile device (12) comprising a receiver (32) and the mobile device (12) being adapted to:
operate the receiver (32) to receive one or more information blocks, IBs, broadcast by a network node (10) in the communication network (2), each IB indicating a respective current frame number in the predefined plurality of frames and a time reference bit, the time reference bit indicating whether the current predefined period is a particular one of a number of predefined periods in the extended period, and
process the current frame number in a received IB to determine the current frame number in the extended period after receiving an IB with a time reference bit indicating that the current predefined period is the particular one of the predefined periods in the extended period, wherein the predefined periods in the network (2) are system frame number, SFN, periods and the frame number is an SFN and **characterized in that** the extended period comprises four or more SFN periods.

11. A mobile device (12) as in claim 10, wherein the mobile device (12) is adapted to operate in a discontinuous reception, DRX, mode, with a maximum DRX cycle period for the mobile device (12) corresponding to the length of the extended period.

12. A mobile device (12) as in claim 11, wherein the mobile device (12) is adapted to operate in a DRX mode with a selected DRX cycle length that is longer than a predefined period up to the maximum DRX cycle period, and the mobile device (12) is further adapted to use the determined current frame number in the extended period to determine the current frame number in the selected DRX cycle length.

13. A mobile device (12) as in any of claims 10-12, wherein the one or more IBs are master information blocks, MIBs.

14. A mobile device (12) as in any of claims 10-13, wherein the mobile device (12) is further adapted to receive an indication of the number of predefined periods until the time reference bit is set from the network node (10).

15. A mobile device (12) as in claim 14, wherein the mobile device (12) is further adapted to receive the indication of the number of predefined periods during the setup of the mobile device (12) or during handover of the mobile device (12) to the network node (10).

## Patentansprüche

1. Verfahren des Betriebs eines Netzwerkknotens (10) in einem Kommunikationsnetz (2) zur Bereitstellung von Zeitinformationen für eine mobile Vorrichtung (12), wobei das Netz (2) einen verlängerten Zeitraum definiert, der länger ist als ein vordefinierter Zeitraum im Netz (2), wobei der vordefinierte Zeitraum im Netz (2) der Zeit entspricht, die benötigt wird, um eine vordefinierte Vielzahl von Rahmen zu übertragen, das Verfahren umfassend:
Aussenden (101) einer Vielzahl von Informationsblöcken, IBs, an die mobile Vorrichtung (12), wobei jeder IB eine aktuelle Anzahl von Rahmen in der vordefinierten Vielzahl von Rahmen und ein Zeitreferenzbit anzeigt, wobei das Zeitreferenzbit anzeigt, ob der aktuelle vordefinierte Zeitraum ein bestimmter Zeitraum einer Anzahl von vordefinierten Zeiträumen im verlängerten Zeitraum ist, wobei die vordefinierten Zeiträume im Netz (2) Systemrahmennummer (SFN)-Zeiträume sind und die Rahmennummer eine SFN ist und **dadurch gekennzeichnet, dass**
der verlängerte Zeitraum vier oder mehrere SFN-Zeiträume umfasst.

2. Computerprogrammprodukt mit einem eingebetteten computerlesbaren Code, wobei der computerlesbare Code so konfiguriert ist, dass bei der Ausführung durch einen geeigneten Computer oder Prozessor bewirkt wird, dass der Computer oder Prozessor das Verfahren nach Anspruch 1 ausfiihrt.

3. Netzwerkknoten (10) zum Verwenden in einem Kommunikationsnetz (2) zur Bereitstellung von Zeitinformationen für eine mobile Vorrichtung (12), wobei das Netz (2) einen verlängerten Zeitraum definiert, der länger ist als ein vordefinierter Zeitraum im Netz (2), wobei der vordefinierte Zeitraum im Netz (2) der Zeit entspricht, die benötigt wird, um eine vordefinierte Vielzahl von Rahmen zu übertragen, wobei der Netzwerkknoten (10) zu Folgendem eingerichtet ist:
Aussenden einer Vielzahl von Informationsblöcken, IBs, an die mobile Vorrichtung (12), wobei jeder IB eine aktuelle Rahmennummer in der vordefinierten Vielzahl von Rahmen und ein Zeitreferenzbit anzeigt, wobei das Zeitreferenzbit anzeigt, ob der aktuelle vordefinierte Zeitraum ein bestimmter Zeitraum einer Anzahl von vordefinierten Zeiträumen im verlängerten Zeitraum ist, wobei die vordefinierten Zeiträume im Netz (2) Systemrahmennummer (SFN)-Zeiträume sind und die Rahmennummer eine SFN ist und **dadurch gekennzeichnet, dass**
der verlängerte Zeitraum vier oder mehr SFN-Zeiträume umfasst.

4. Verfahren des Betriebs einer mobilen Vorrichtung (12) in einem Kommunikationsnetz (2), wobei das Netz (2) einen verlängerten Zeitraum definiert, der länger ist als ein vordefinierter Zeitraum im Netz (2), wobei der vordefinierte Zeitraum im Netz (2) der Zeit entspricht, die benötigt wird, um eine vordefinierte Vielzahl von Rahmen zu übertragen, das Verfahren umfassend:
Betreiben (111) eines Empfängers (32) in der mobilen Vorrichtung (12) zum Empfangen eines oder mehrerer Informationsblöcke, IBs, die von einem Netzwerkknoten (10) im Kommunikationsnetz (2) ausgesendet werden, wobei jeder IB eine entsprechende aktuelle Rahmennummer in der vordefinierten Vielzahl von Rahmen und ein Zeitreferenzbit anzeigt, wobei das Zeitreferenzbit anzeigt, ob der aktuelle vordefinierte Zeitraum ein bestimmter Zeitraum einer Anzahl von vordefinierten Zeiträumen im verlängerten Zeitraum ist; und
nach dem Empfangen eines IBs mit einem Zeitreferenzbit, das anzeigt, dass der aktuelle vordefinierte Zeitraum der bestimmte der Anzahl von vordefinierten Zeiträumen im verlängerten Zeitraum ist, Verarbeiten (117) der aktuellen Rahmennummer im IB zur Bestimmung der aktuellen Rahmennummer im verlängerten Zeitraum, wobei die vordefinierten Zeiträume im Netz (2) Systemrahmennummer (SFN)-Zeiträume sind und die Rahmennummer eine SFN ist und **dadurch gekennzeichnet, dass**
der verlängerte Zeitraum vier oder mehr SFN-Zeiträume umfasst.

5. Verfahren nach Anspruch 4, wobei das Verfahren ferner den Schritt des Betriebs der mobilen Vorrichtung (12) in einem diskontinuierlichen Empfangs (DRX)-Betrieb umfasst, wobei eine maximale DRX-Zyklusdauer für die mobile Vorrichtung (12) der Länge des verlängerten Zeitraums entspricht.

6. Verfahren nach Anspruch 5, wobei der Schritt des Betriebs der mobilen Vorrichtung (12) in einem DRX-Betrieb den Betrieb der mobilen Vorrichtung (12) mit einer ausgewählten DRX-Zyklusdauer umfasst, die länger ist als ein vordefinierter Zeitraum bis zur maximalen DRX-Zyklusdauer und wobei das Verfahren ferner den folgenden Schritt umfasst:
Verwenden der bestimmten aktuellen Rahmennummer im verlängerten Zeitraum zur Bestimmung der aktuellen Rahmennummer in der ausgewählten DRX-Zyklusdauer.

7. Verfahren nach einem der Ansprüche 4 bis 6, wobei der eine oder die mehreren IBs Master-Informationsblöcke, MIBs, sind.

8. Verfahren nach einem der Ansprüche 4 bis 7, wobei das Verfahren ferner den folgenden Schritt umfasst:
Empfangen einer Anzeige der Anzahl von vordefinierten Zeiträumen bis das Zeitreferenzbit vom Netzwerkknoten (10) festgelegt ist.

9. Computerprogrammprodukt mit einem eingebetteten computerlesbaren Code, wobei der computerlesbare Code so konfiguriert ist, dass bei der Ausführung durch einen geeigneten Computer oder Prozessor bewirkt wird, dass der Computer oder Prozessor das Verfahren nach einem der Ansprüche 4 bis 8 ausführt.

10. Mobile Vorrichtung (12) zum Verwenden in einem Kommunikationsnetz (2), wobei das Netz (10) einen verlängerten Zeitraum definiert, der länger ist als ein vordefinierter Zeitraum im Netz (10), wobei der vordefinierte Zeitraum im Netz (10) der Zeit entspricht, die benötigt wird, um eine vordefinierte Vielzahl von Rahmen zu übertragen, wobei die mobile Vorrichtung (12) einen Empfänger (32) umfasst und wobei die mobile Vorrichtung (12) zu Folgendem eingerichtet ist:
Betreiben des Empfängers (32) zum Empfangen eines oder mehrerer Informationsblöcke, IBs, die von einem Netzwerkknoten (10) im Kommunikationsnetz (2) ausgesendet werden, wobei jeder IB eine entsprechende aktuelle Rahmennummer in der vordefinierten Vielzahl von Rahmen und ein Zeitreferenzbit anzeigt, wobei das Zeitreferenzbit anzeigt, ob der aktuelle vordefinierte Zeitraum ein bestimmter Zeitraum einer Anzahl von vordefinierten Zeiträumen im verlängerten Zeitraum ist, und
Verarbeiten der aktuellen Rahmennummer in einem empfangenen IB zur Bestimmung der aktuellen Rahmennummer im verlängerten Zeitraum nach dem Empfang eines IBs mit einem Zeitreferenzbit, das anzeigt, dass der aktuelle vordefinierte Zeitraum der bestimmte der vordefinierten Zeiträume im verlängerten Zeitraum ist, wobei die vordefinierten Zeiträume im Netz (2) Systemrahmennummer (SFN)-Zeiträume sind und die Rahmennummer eine SFN ist und **dadurch gekennzeichnet, dass**
der verlängerte Zeitraum vier oder mehr SFN-Zeiträume umfasst.

11. Mobile Vorrichtung (12) nach Anspruch 10, wobei die mobile Vorrichtung (12) eingerichtet ist, in einem diskontinuierlichen Empfangs (DRX)-Betrieb zu arbeiten, wobei eine maximale DRX-Zyklusdauer für die mobile Vorrichtung (12) der Länge des verlängerten Zeitraums entspricht.

12. Mobile Vorrichtung (12) nach Anspruch 11, wobei die mobile Vorrichtung (12) eingerichtet ist, in einem diskontinuierlichen Empfangs (DRX)-Betrieb zu arbeiten, wobei eine ausgewählte DRX-Zyklusdauer länger ist als ein vordefinierter Zeitraum bis zur maximalen DRX-Zyklusdauer und wobei die mobile Vorrichtung (12) ferner eingerichtet ist, die bestimmte aktuelle Rahmennummer im verlängerten Zeitraum zur Bestimmung der aktuellen Rahmennummer in der ausgewählten DRX-Zyklusdauer zu bestimmen.

13. Mobile Vorrichtung (12) nach einem der Ansprüche 10 bis 12, wobei der eine oder die mehreren IBs Master-Informationsblöcke, MIBs, sind.

14. Mobile Vorrichtung (12) nach einem der Ansprüche 10 bis 13, wobei die mobile Vorrichtung (12) ferner eingerichtet ist, eine Anzeige der Anzahl von vordefinierten Zeiträumen zu empfangen bis das Zeitreferenzbit vom Netzwerkknoten (10) festgelegt ist.

15. Mobile Vorrichtung (12) nach Anspruch 14, wobei die mobile Vorrichtung (12) ferner eingerichtet ist, die Anzeige der Anzahl von vordefinierten Zeiträumen während des Einrichtens der mobilen Vorrichtung (12) oder während der Übergabe der mobilen Vorrichtung (12) an den Netzwerkknoten (10) zu empfangen.

## Revendications

1. Procédé de fonctionnement d'un noeud de réseau (10) dans un réseau de communication (2) pour fournir une information de cadencement pour un dispositif mobile (12), le réseau (2) définissant une période étendue qui est plus longue qu'une période prédéfinie dans le réseau (2), la période prédéfinie dans le réseau (2) correspondant au temps nécessaire pour transmettre une pluralité prédéfinie de trames, le procédé comprenant :
la diffusion (101) d'une pluralité de blocs d'information, IB, sur le dispositif mobile (12), chaque IB indiquant un numéro de trame courant dans la pluralité prédéfinie de trames et un bit de référence de temps, le bit de référence de temps indiquant si oui ou non la période prédéfinie courante est une période particulière d'un certain nombre de périodes prédéfinies dans la période étendue, dans lequel les périodes prédéfinies dans le réseau (2) sont des périodes de numéro de trame système, SFN, et le numéro de trame est un SFN, et **caractérisé en ce que**
la période étendue comprend quatre périodes SFN ou plus.

2. Progiciel informatique qui comporte un code lisible par ordinateur intégré en son sein, le code lisible par ordinateur étant configuré de telle sorte que, lors de son exécution par un ordinateur ou un processeur approprié, l'ordinateur ou le processeur soit forcé de réaliser le procédé selon la revendication 1.

3. Noeud de réseau (10) pour une utilisation dans un réseau de communication (2) pour fournir une information de cadencement pour un dispositif mobile (12), le réseau (2) définissant une période étendue qui est plus longue qu'une période prédéfinie dans le réseau (2), la période prédéfinie dans le réseau (2) correspondant au temps nécessaire pour transmettre une pluralité prédéfinie de trames, le noeud de réseau (10) étant adapté de manière à :
diffuser une pluralité de blocs d'information, IB, sur le dispositif mobile (12), chaque IB indiquant un numéro de trame courant dans la pluralité prédéfinie de trames et un bit de référence de temps, le bit de référence de temps indiquant si oui ou non la période prédéfinie courante est une période particulière d'un certain nombre de périodes prédéfinies dans la période étendue, dans lequel les périodes prédéfinies dans le réseau (2) sont des périodes de numéro de trame système, SFN, et le numéro de trame est un SFN, et **caractérisé en ce que**
la période étendue comprend quatre périodes SFN ou plus.

4. Procédé de fonctionnement d'un dispositif mobile (12) dans un réseau de communication (2), le réseau (2) définissant une période étendue qui est plus longue qu'une période prédéfinie dans le réseau (2), la période prédéfinie dans le réseau (2) correspondant au temps nécessaire pour transmettre une pluralité prédéfinie de trames, le procédé comprenant :
le fonctionnement (111) d'un récepteur (32) dans le dispositif mobile (12) de manière à ce qu'il reçoive un ou plusieurs bloc(s) d'information qui est/sont diffusé(s) par un noeud de réseau (10) dans le réseau de communication (2), chaque IB indiquant un numéro de trame courant respectif dans la pluralité prédéfinie de trames et un bit de référence de temps, le bit de référence de temps indiquant si oui ou non la période prédéfinie courante est une période particulière d'un certain nombre de périodes prédéfinies dans la période étendue ; et
après la réception d'un IB avec un bit de référence de temps qui indique que la période prédéfinie courante est la période particulière du nombre de périodes prédéfinies dans la période étendue, le traitement (117) du numéro de trame courant dans ledit IB de manière à déterminer le numéro de trame courant dans la période étendue, dans lequel les périodes prédéfinies dans le réseau (2) sont des périodes de numéro de trame système, SFN, et le numéro de trame est un SFN, et **caractérisé en ce que**
la période étendue comprend quatre périodes SFN ou plus.

5. Procédé selon la revendication 4, le procédé comprenant en outre l'étape consistant à faire fonctionner le dispositif mobile (12) dans un mode réception discontinue, DRX, une période de cycle DRX maximum pour le dispositif mobile (12) correspondant à la longueur de la période étendue.

6. Procédé selon la revendication 5, dans lequel l'étape de fonctionnement du dispositif mobile (12) dans un mode DRX comprend le fonctionnement du dispositif mobile (12) selon une longueur de cycle DRX sélectionnée qui est plus longue qu'une période prédéfinie jusqu'à la période de cycle DRX maximum, et le procédé comprend en outre l'étape consistant à :
utiliser le numéro de trame courant déterminé dans la période étendue de manière à déterminer le numéro de trame courant dans la longueur de cycle DRX sélectionnée.

7. Procédé selon l'une quelconque des revendications 4 à 6, dans lequel les un ou plusieurs IB sont des blocs d'information maître, MIB.

8. Procédé selon l'une quelconque des revendications 4 à 7, dans lequel le procédé comprend en outre l'étape consistant à :
recevoir une indication du nombre de périodes prédéfinies jusqu'à ce que le bit de référence de temps soit établi à partir du noeud de réseau (10).

9. Progiciel informatique comportant un code lisible par ordinateur intégré en son sein, le code lisible par ordinateur étant configuré de telle sorte que, lors de son exécution par un ordinateur ou un processeur approprié, l'ordinateur ou le processeur soit forcé de réaliser l'un quelconque des procédés selon l'une quelconque des revendications 4 à 8.

10. Dispositif mobile (12) pour une utilisation dans un réseau de communication (2), le réseau (10) définissant une période étendue qui est plus longue qu'une période prédéfinie dans le réseau (10), la période prédéfinie dans le réseau (10) correspondant au temps nécessaire pour transmettre une pluralité prédéfinie de trames, le dispositif mobile (12) comprenant un récepteur (32) et le dispositif mobile (12) étant adapté de manière à :
faire fonctionner le récepteur (32) de manière à ce qu'il reçoive un ou plusieurs blocs d'information, IB, qui est/sont diffusé(s) par un noeud de réseau (10) dans le réseau de communication (2), chaque IB indiquant un numéro de trame courant respectif dans la pluralité prédéfinie de trames et un bit de référence de temps, le bit de référence de temps indiquant si oui ou non la période prédéfinie courante est une période particulière d'un certain nombre de périodes prédéfinies dans la période étendue ; et
traiter le numéro de trame courant dans un IB reçu de manière à déterminer le numéro de trame courant dans la période étendue après la réception d'un IB avec un bit de référence de temps qui indique que la période prédéfinie courante est la période particulière des périodes prédéfinies dans la période étendue, dans lequel les périodes prédéfinies dans le réseau (2) sont des périodes de numéro de trame système, SFN, et le numéro de trame est un SFN et **caractérisé en ce que**
la période étendue comprend quatre périodes SFN ou plus.

11. Dispositif mobile (12) selon la revendication 10, dans lequel le dispositif mobile (12) est adapté de manière à fonctionner dans un mode réception discontinue, DRX, une période de cycle DRX maximum pour le dispositif mobile (12) correspondant à la longueur de la période étendue.

12. Dispositif mobile (12) selon la revendication 11, dans lequel le dispositif mobile (12) est adapté de manière à fonctionner dans un mode DRX avec une longueur de cycle DRX sélectionnée qui est plus longue qu'une période prédéfinie jusqu'à la période de cycle DRX maximum, et le dispositif mobile (12) est en outre adapté de manière à utiliser le numéro de trame courant déterminé dans la période étendue de manière à déterminer le numéro de trame courant dans la longueur de cycle DRX sélectionnée.

13. Dispositif mobile (12) selon l'une quelconque des revendications 10 à 12, dans lequel les un ou plusieurs IB sont des blocs d'information maître, MIB.

14. Dispositif mobile (12) selon l'une quelconque des revendications 10 à 13, dans lequel le dispositif mobile (12) est en outre adapté de manière à recevoir une indication du nombre de périodes prédéfinies jusqu'à ce que le bit de référence de temps soit établi à partir du noeud de réseau (10).

15. Dispositif mobile (12) selon la revendication 14, dans lequel le dispositif mobile (12) est en outre adapté de manière à recevoir l'indication du nombre de périodes prédéfinies pendant l'instauration du dispositif mobile (12) ou pendant le transfert du dispositif mobile (12) sur le noeud de réseau (10).
